# EUROPEAN PATENT APPLICATION

(11) **EP 4 361 229 A1**
(43) Date of publication of application: **01.05.2024**
(21) Application number: 22204721.9
(22) Date of filing: 31.10.2022
(51) Int. Cl.: C09J 5/06, C09J 7/10, C09J 7/35

(54) **MULTILAYER PRE-CROSSLINKED STRUCTURAL ADHESIVE TAPE**

(71) Applicant: 3M Innovative Properties Company, Saint Paul, MN 55133-3427 (US)
(72) Inventor: CURA, Elisabeth, 40223 Düsseldorf (DE); TASCH, Boris, 40591 Düsseldorf (DE); KLÜNKER, Eike, 41564 Kaarst (DE); STEIGER, Wolf, 82538 Geretsried (DE); BISSINGER, Peter, 86911 Diessen (DE); JUNG, Adrien, 41453 Neuss (DE)
(74) Representative: Mathys & Squire

(57) **Abstract**

According to one aspect, the present disclosure relates to a multilayer structural adhesive tape, comprising
(iii) at least one first adhesive layer (A), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
(iv) at least one second adhesive layer (B), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
wherein
the thermally curable resins in the at least one first adhesive layer (A) and in the at least one second adhesive layer (B) are uncured and are in particular embedded into the polymeric material comprising the self-polymerization reaction product of a polymerizable material comprising a radiation self-polymerizable multi-functional compound;
wherein the self-polymerization of the polymerizable material comprising a radiation self-polymerizable multi-functional compound was effectuated by irradiation of a free-radical polymerization initiator for the radiation self-polymerizable multi-functional compound with light;
wherein the at least first adhesive layer (A) is different from the at least one second adhesive layer (B).

## Description

### Technical Field

The present disclosure relates generally to the field of adhesives, more specifically to the field of structural adhesive d films for use in particular for bonding metal parts. More specifically, the present disclosure relates to a multilayer structural adhesive tape. The present disclosure also relates to a process for producing a multilayer structural adhesive tape as well as amethod for bonding two parts using the tape. The present disclosure is further directed to the use of a multilayer structural adhesive tape for bonding applications in the industry.

### Background

Adhesives have been used for a variety of holding, sealing, protecting, marking and masking purposes. One type of adhesive which is particularly preferred for many applications is represented by structural adhesives. Structural adhesives are typically thermosetting resin compositions that may be used to replace or augment conventional joining techniques such as screws, bolts, nails, staples, rivets and metal fusion processes (e.g. welding, brazing and soldering). Structural adhesives are used in a variety of applications that include general-use industrial applications, as well as high-performance applications in the automotive and aerospace industries. To be suitable as structural adhesives, the adhesives shall exhibit high and durable mechanical strength as well as high impact resistance.

Structural adhesives may, in particular, be used for metal joints in vehicles. For example, an adhesive may be used to bond a metal panel, for example a roof panel to the support structure or chassis of the vehicle. Further, an adhesive may be used in joining two metal panels of a vehicle closure panel. Vehicle closure panels typically comprise an assembly of an outer and an inner metal panel whereby a hem structure is formed by folding an edge of an outer panel over an edge of the inner panel. Typically, an adhesive is provided there between to bond the panels together. Further, a sealant typically needs to be applied at the joint of the metal panels to provide sufficient corrosion resistance. For example, US Pat. No. 6,000,118 (Biernat et al.) discloses the use of a flowable sealant bead between the facing surfaces of the two panels, and a thin film of uncured paint-like resin between a flange on the outer panel and the exposed surface of the inner panel. The paint film is cured to a solid impervious condition by a baking operation performed on the completed door panel. US Pat. No. 6,368,008 (Biernat et al.) discloses the use of an adhesive for securing two metal panels together. The edge of the joint is further sealed by a metal coating. WO 2009/071269 (Morral et al.) discloses an expandable epoxy paste adhesive as a sealant for a hem flange. A further hemmed structure is disclosed in US Pat. No. 6,528,176 (Asai et al.). Further efforts have been undertaken to develop adhesive compositions whereby two metal panels, in particular an outer and an inner panel of a vehicle closure panel, could be joined with an adhesive without the need for a further material for sealing the joint. Thus, it became desirable to develop adhesive systems that provide adequate bonding while also sealing the joint and providing corrosion resistance. A partial solution has been described in e.g. WO 2007/014039 (Lamon), which discloses a thermally expandable and curable epoxy-based precursor of an expanded thermoset film toughened foamed film comprising a mixture of solid and liquid epoxy resins, and which is claimed to provide both favorable energy absorbing properties and gap filling properties upon curing. Other partial solutions have been described in EP-A1-2 700 683 (Elgimiabi et al.) and in WO 2017/197087 (Aizawa) which disclose structural adhesive films suitable for forming a hem flange structure. Structural adhesive films or tapes may suffer from lack of elasticity and insufficient tackiness which makes them only partially suitable for hem flange bonding. Further partial solutions have been described in US-A1-2018/0127625 (Shafer et al.) which discloses a so-called structural bonding tape.

In the technical filed of structural adhesive tapes epoxy hot-melt based tapes are well established. This kind of adhesive is usually not pre-crosslinked before the curing of the epoxy component. However, an also well-known phenomenon represents a challenge in the state of the art. The so-called cold flow describes the slow flow of the uncured adhesive at room temperature, i.e. at storing temperature. This cold flow-phenomenon may affect the stability of planetary rolls or level wound rolls over the geometry of die cuts. The stability of the thickness of the roll is inversely correlated to the thickness of the tape. That is, the thicker the tape, the higher the cold flow effect, which usually results in less stable rolls. Therefore, it is known that for commonly used epoxy-resin based structural adhesive tapes is is difficult to manufacture long rolls having tape thicknesses of larger than about 600 micrometers. However, there exists a desire in the art to make epoxy-based structural adhesive tape long rolls having these greater tape thicknesses available. Thus, there exists a general desire in the art to mitigate or even avoid cold flow in structural adhesive tapes.

Without further contesting the technical advantages associated with the solutions known in the art, there is still a need for a structural adhesive tape which would overcome the above-mentioned deficiencies.

### Summary

According to one aspect, the present disclosure relates to a multilayer structural adhesive tape, comprising
(i) at least one first adhesive layer (A), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
(ii) at least one second adhesive layer (B), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
wherein
the thermally curable resins in the at least one first adhesive layer (A) and in the at least one second adhesive layer (B) are uncured and are in particular embedded into the polymeric material comprising the self-polymerization reaction product of a polymerizable material comprising a radiation self-polymerizable multi-functional compound;
wherein the self-polymerization of the polymerizable material comprising a radiation self-polymerizable multi-functional compound was effectuated by irradiation of a free-radical polymerization initiator for the radiation self-polymerizable multi-functional compound with light;
wherein the at least first adhesive layer (A) is different from the at least one second adhesive layer (B).

According to another aspect, the present disclosure is directed to a process for making a multilayer structural adhesive tape, comprising the following steps:
(I) Coating a first composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto a substrate such as to form a first adhesive precursor layer;
(II) Irradiating the first adhesive precursor layer with visible light such as to initiate self-polymerization of the radiation self-polymerizable compound, whereby a first adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound;
(III) Coating a second composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto a substrate such as to form a second adhesive precursor layer;
(IV) Irradiating the second adhesive precursor layer with visible light such as to initiate self-polymerization of the radiation self-polymerizable compound, whereby a second adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound;
(V) Laminating the first adhesive layer onto the second adhesive layer such that a multilayer adhesive tape is obtained.

In still another aspect of the present disclosure, it is provided a method for making a multilayer structural adhesive tape, comprising the following steps
(la) Coating a first composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto a substrate such as to form a first adhesive precursor layer;
(Ila) Coating a second composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto first adhesive precursor layer such as to form a second adhesive precursor layer and a multilayer structural adhesive tape precursor;
(IIIa) Irradiating the multilayer structural adhesive tape precursor with visible light such as to initiate self-polymerization of the radiation self-polymerizable compound in the first adhesive precursor layer and the second adhesive precursor layer; whereby a first adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound; whereby a second adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound;
thereby obtaining a multilayer structural adhesive tape.

In a further aspect, the present disclosure provides a method of bonding two parts, which comprises the steps of:
a) applying a multilayer structural adhesive tape as described herein to a surface of at least one of the two parts;
b) joining the two parts so that the multilayer structural adhesive tape is positioned between the two parts; and
c) substantially fully curing the multilayer structural adhesive tape by initiating the thermal curing initiator for the thermally curable resin, thereby obtaining a substantially fully cured structural adhesive composition and adhesively bonding the two parts.

According to yet another aspect, the present disclosure relates to the use of the multilayer structural adhesive tape for bonding and joining operations in the automotive, home applicance, consumer electronics, aerospace, marine or commercial transportation industry.

### Detailed description

According to one aspect, the present disclosure relates to a multilayer structural adhesive tape, comprising
(i) at least one first adhesive layer (A), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
(ii) at least one second adhesive layer (B), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
wherein
the thermally curable resins in the at least one first adhesive layer (A) and in the at least one second adhesive layer (B) are uncured and are in particular embedded into the polymeric material comprising the self-polymerization reaction product of a polymerizable material comprising a radiation self-polymerizable multi-functional compound;
wherein the self-polymerization of the polymerizable material comprising a radiation self-polymerizable multi-functional compound was effectuated by irradiation of a free-radical polymerization initiator for the radiation self-polymerizable multi-functional compound with light;
wherein the at least first adhesive layer (A) is different from the at least one second adhesive layer (B).

In the context of the present disclosure, it has been surprisingly found that a multilayer structural adhesive tape in which thermally curable resins in the at least one first adhesive layer (A) and in the at least one second adhesive layer (B) are uncured and are in particular embedded into the polymeric material comprising the self-polymerization reaction product of a polymerizable material comprising a radiation self-polymerizable multi-functional compound exhibits improved cold-flow behaviour in that either a much reduced cold flow is observed in comparison to comparable structural adhesive tapes, or which even do not exhibit detectable cold flow. Accordingly, with the structural adhesive tape according to the present disclosure, it becomes possible to manufacture structural adhesive tapes desirable for a multitude of industrial applications in greater thicknesses and reliability than previously possible. Furthermore, the multilayer structural adhesive tapes according to the present disclosure exhibit excellent characteristics and performance with regard to handling, ageing stability, flexibility, elasticity in their uncured state, as well as to adhesive strength, ageing stability, and corrosion resistance in their fully cured state. The multilayer structural adhesive tapes as described herein have been surprisingly found to combine most of the advantageous characteristics of both the structural adhesive films and the structural bonding tapes known in the art, without exhibiting their known deficiencies.

It has yet surprisingly been discovered that, in some executions, the multilayer structural adhesive tape as described herein provides excellent characteristics and performance as to adhesion to oily contaminated substrates, such as stainless steel and aluminum.

Moreover, it was found that the different layers of the multilayer structural adhesive tape according to the present disclosure may be adapted in thickness, composition or sequence to the requirements of the corresponding applications, such as surfaces to be bonded to.

Without wishing to be bound by theory, it is believed that these excellent characteristics are due in particular to the which thermally curable resins in the at least one first adhesive layer (A) and in the at least one second adhesive layer (B) are uncured and are in particular embedded into the polymeric material comprising the self-polymerization reaction product of a polymerizable material comprising a radiation self-polymerizable multi-functional compound as specified above. This enables the provision of multilayer structural adhesive tapes which do not exhibit cold flow, are flexible, may be shipped and applied in rolls, are stable and easy to work with, while also provide good adhesive properties when fully cured. Still without wishing to be bound by theory, it is believed that the dual/hybrid curing system involving two independent reactive systems during production of the mulitilayer structural adhesive tape according to the present disclosure, which have a different chemical nature and which co-exist in the curable precursor without interfering with each other, has the ability to form - upon complete curing - an interpenetrating network involving a polymeric material comprising the self-polymerization reaction product of a polymerizable material comprising the self-polymerizable multi-functional compound and a polymeric product resulting from the thermal curing of the thermally curable resin.

More specifically, the above-described hybrid curing system is particularly suitable to perform an overall curing mechanism involving a two-stage reaction whereby two polymer networks are formed sequentially.

In a first stage reaction (B-stage), the first self-polymerizable multi-functional compounds self-polymerize upon initiation by the free-radical polymerization initiator for the radiation self-polymerizable multi-functional compound, thereby forming a polymeric material comprising the self-polymerization reaction product of a polymerizable material comprising the self-polymerizable multi-functional compounds. Typically, the temperature T1 at which the free-radical polymerization initiator for the radiation self-polymerizable multi-functional compound is initiated is insufficient to cause initiation of the thermal curing initiator of the thermally curable resin. As a consequence, the first stage reaction typically results in a partially cured precursor, wherein the thermally curable resins are substantially uncured and are in particular embedded into the polymeric material comprising the self-polymerization reaction product of the polymerizable material comprising the self-polymerizable multi-functional compounds.

The first stage reaction which typically leads to a phase change of the initial curable precursor due in particular to the polymeric material comprising the self-polymerization reaction product of the self-polymerizable multi-functional compounds providing structural integrity to the initial curable precursor, is typically referred to as a film-forming reaction. Advantageously, the first stage reaction does typically not require any substantial energy input.

Furthermore, it is particularly advantageous when light of the visible spectrum of the light, in particular blue light, is used to activate the free-radical polymerization initiator, when compared to UV-light activation commonly utilized for initiating cure of adhesive in industrial applications. Not only is the penetration of visible light, in particular blue light, higher, it was also found that the reaction proceeds much faster than with UV-A-light. While the former has the advantage that thicker films may be generated, the latter has the advantage that films may be generally faster manufactured. Also, EHS concerns using UV light at manufacturing sites may be avoided.

The partially cured precursor may typically take the form of a film-like self-supporting composition or a multi-dimensional object having a dimensional stability, which makes it possible for it to be pre-applied on a selected substrate, in particular a liner, until further processing. In other words, the so-called partially cured precursor forms a layer of the multilayer structural adhesive film as described herein. The partially cured precursor, i.e. a layer of the multilayer structural adhesive tape as described herein is typically provided with excellent characteristics and performance as to elasticity, tackiness, cold-flow and surface wetting. The radiation self-polymerizable multi-functional compound comprising a polyether oligomeric backbone and at least one free-radical (co)polymerizable reactive group at each terminal position of the oligomer backbone is believed to play a critical role in obtaining the advantageous properties of the partially cured precursor as described above. Advantageously, the partially cured precursor may be appropriately shaped to fulfil the requirements of any specific applications.

The second stage reaction (A-stage) occurs after the first stage reaction and involves thermally curing the thermally curable resins upon thermal initiation by the appropriate thermal curing initiator at a temperature T2 which is typically greater than the temperature T1. This reaction step typically results in forming a polymeric product resulting from the thermal curing of the thermally curable resins, in particular from the (co)polymerization of the thermally curable resins and the thermal curing initiators (or curatives) of the thermally curable resins.

The multilayer structural adhesive tape of the present disclosure typically relies on the above-described dual/hybrid curing system involving two independent reactive systems activated with distinct triggering steps to ensure performing the above-described two-stage reaction in a sequential manner.

As such, the multilayer structural adhesive tape of the present disclosure is outstandingly suitable for bonding metal parts, in particular for hem flange bonding of metal parts in the automotive industry. Advantageously still, the multilayer structural adhesive tape is suitable for automated handling and application, in particular by fast robotic equipment.

In general, the at least one first adhesive layer (A) is different from the at least one second adhesive layer (B). The at least one first adhesive layer (A) may be different from the at least one second adhesive layer (B) in at least one property selected from thickness and/or chemical composition leading to physical differences between the layers such as differences in thermal conductivity, electrical conductivity, expandability, viscoelasticity, toughness, adhesive strength, compressibility, and any combinations thereof. That is, layers (A) and (B) may just differ in thickness. However, different chemical compositions of layer (A) and layer (B) may lead to differences in any one of the aforementioned properties. For instance, layer (A) may be adapted to exhibit excellent adhesion to an oil-covered or oil-contaminated metal surface, while layer (B) may be adapted to show good adhesion to a non-metal surface such as a polymer surface or a surface of a composite panel. In another example, a thin layer (A) may be adapted to exhibit good adhesive strength to a certain surface, while a thicker layer (B) may be adapted to show good thermal or electrical conductivity, which may be desirable when electrical parts or parts of batteries are to be bonded. That means, for certain applications it is preferable that the at least one first adhesive layer (A) exhibits a different curing behaviour than the at least one second adhesive layer (B). With regard to differences in chemical composition, it is preferred that the at least one first adhesive layer (A) is chemically different from the at least one second adhesive layer (B) in chemical composition of the adhesive resins, amounts of adhesive resins, chemical constitution of thermal curing initiator for the thermally curable resin, amount of thermal curing initiator for the thermally curable resin, chemical constitution of further compounds present, amounts of further compounds present, and any combination thereof. In particular, it may be preferred that the at least one first adhesive layer (A) exhibits a different curing behaviour than the at least one second adhesive layer (B). That is, it may be preferred that the curing kinetics of the thermally curable adhesive composition in layer (A) is different from the curing kinetics of the thermally curable adhesive composition in layer (B).

For numerous applications, it is desirable that the outer major surfaces of the multilayer structural adhesive film exhibit different properties than the core of the multilayer structural adhesive film as described herein. Accordingly, it is preferred that the multilayer structural adhesive tape comprises two layers (A) and one layer (B) wherein layer (B) is located between a first layer (A) and a second layer (A) such that the order of adhesive layers is layer (A) - layer (B) - layer (A). It is also preferred that the multilayer structural adhesive tape comprises two layers (A) and one layer (B) such that layer (B) is sandwiched between two layers of layer (A). This has the advantage that layer (A) may have properties necessary for the adhesion interface to the respective surfaces of the substrates, such as the ability to bond to a metal surface and to absorb lubricants optionally present on the metal surface. These advantageous properties of layers (A) may then be combined with different advantageous properties of core layer (B) such as the ability to absorb relative movement of parts, as well as a certain elongation, and/or also to compensate different thermal expansion of the bonded parts. Thus, having a layer (B) as a core and two layers (A) as cover layers or substrate contact layers at the major surfaces of the tape as described herein permits to differentiate the adhesion interface performance from the adhesive core performance. In this regard, it is preferred that layer (B) is thicker than layer each layer (A). This is advantageous in that layer (B) may be adapted to adjust the properties needed for the respective application, whereas it is only needed to adjust surface interface adhesive performance of each layer (A). Furthermore, it is also preferred that the multilayer structural adhesive tape as described herein further comprises a third layer (C) different from layer (A) and different from layer (B). The third layer (C) is preferably arranged on the second major surface of layer (B) opposite the major surface of layer (B) covered by layer (A). Accordingly, layer (B) is arranged between layer (A) and layer (C). This has the advantage that surface interface adhesion performance of each layer (A) and (C) may be different from each other. In other words, surface interface adhesive performance may be adjusted to two different substrates to be adhesively connected. For instance, layer (A) may be adjusted to bond to an oily metal surface, whereas layer (C) may be adjusted to bond to a polymeric surface, a carbon fiber surface, a composite surface, or even a ceramic surface. In this context, it is also preferred that the layer (B) has a greater thickness than layer (A) and a greater thickness than layer (C). This has the advantage that the chemical composition of layer (B) may be adjusted to achieve one or more properties listed above suitable for the respective application, whereas the chemical compositions of layers (A) and (C) may be adjusted to achieve the desired surface interface adhesive performance necessary for bonding to the respective substrate surfaces.

Regarding the thickness of the multilayer structural adhesive tape according to the present disclosure, it is preferred that the thickness is least 100 micrometers, preferably of at least 200 micrometers, and more preferably of at least 300 micrometers. It was found that with the techniques described herein, structural adhesive tapes having greater thicknesses yet still exhibiting superior adhesive properties, good storage behaviour, not being affected by cold flow, and exhibiting desirable flexibility and elongation behaviour, may be achieved. That is, the multilayer structural adhesive tape as described herein may exhibit a thickness in the range of from 100 micrometers to 3 mm, preferably from 200 micrometers to 2.5 mm, and more preferably from 300 micrometers to 2.2 mm.

In the context of the present disclosure, the expression "radiation self-polymerizable compound" is meant to refer to a compound able to form a polymeric product (homopolymer) resulting from the radiation-induced polymerization of the compound almost exclusively with itself, thereby forming a homopolymer. The term "homopolymer" is herein meant to designate polymer(s) resulting exclusively from the polymerization of a single type of monomers.

In the context of the present disclosure still, the expression "thermally curable resin" is meant to refer to a resin/monomer able to form a polymeric product (heteropolymer) resulting from the thermally-induced (co)polymerization of the curable resins and the thermal curing initiators (or curatives) of the thermally curable resins. The term "heteropolymer" is herewith meant to designate a polymer resulting from the (co)polymerization of more than one type of monomers.

In the context of the present disclosure, the expression "the thermally curable resins are substantially uncured" is meant to designate that less than 10 wt.%, less than 5 wt.%, less than 2 wt.%, or even less than 1 wt.% of the initial curable resins are unreacted.

The terms "glass transition temperature" and "Tg" are used interchangeably and refer to the glass transition temperature of a (co)polymeric material or a mixture of monomers and polymers. Unless otherwise indicated, glass transition temperature values are determined by Differential Scanning Calorimetry (DSC).

According to one typical aspect of the curable precursor of the disclosure, the free-radical polymerization initiator is initiated at a temperature T1, wherein the thermal curing initiator is initiated at a temperature T2, wherein the temperature T2 is greater than the temperature T1, and wherein the temperature T1 is insufficient to cause initiation of the thermal curing initiator which therefore remains substantially unreacted.

According to another typical aspect of the curable precursor of the disclosure, the temperature T1 is no greater than 90°C, no greater than 80°C, no greater than 60°C, no greater than 50°C, no greater than 40°C, no greater than 30°C, no greater than 25°C, no greater than 20°C, or even no greater than 15°C.

According to still another typical aspect of the curable precursor of the disclosure, the temperature T1 is in a range from -10°C to 85°C, from 0°C to 80°C, from 5°C to 60°C, from 5°C to 50°C, from 10 to 40°C, or even from 15 to 35°C.

According to yet another typical aspect of the disclosure, the temperature T2 is greater than 90°C, greater than 100°C, greater than 120°C, greater than 140°C, greater than 150°C, greater than 160°C, greater than 180°C, or even greater than 200°C.

According to yet another typical aspect of the disclosure, the temperature T2 is in a range from 95°C to 250°C, from 100°C to 220°C, from 120°C to 200°C, from 140°C to 200°C, from 140°C to 180°C, or even from 160°C to 180°C.

In another typical aspect of the curable precursor of the disclosure, the thermally curable resin and the radiation self-polymerizable multi-functional compound are (substantially) unable to chemically react with each other, in particular by covalent bonding, even when subjected to polymerization or curing initiation. In an exemplary aspect, the thermally curable resin and the radiation self-polymerizable multi-functional compound are unable to (substantially) chemically react with each other, when subjected to polymerization or curing initiation at a temperature of 23°C.

Thermally curable resins for use herein are not particularly limited. Any thermally curable resins commonly known in the art of structural adhesives may be used in the context of the present disclosure. Suitable thermally curable resins for use herein may be easily identified by those skilled in the art in the light of the present disclosure.

According to an advantageous aspect of the present disclosure, the thermally curable resin for use herein comprises at least one functional group selected from the group consisting of epoxy groups, in particular glycidyl groups.

According to another advantageous aspect, the thermally curable resin for use herein comprises at least one epoxy resin. Exemplary epoxy resins for use herein may be advantageously selected from the group consisting of phenolic epoxy resins, bisphenol epoxy resins, hydrogenated epoxy resins, aliphatic epoxy resins, halogenated bisphenol epoxy resins, novolac epoxy resins, and any mixtures thereof.

Epoxy resins are well known to those skilled in the art of structural adhesive compositions. Suitable epoxy resins for use herein and their methods of manufacturing are amply described for example in EP-A1-2 700 683 (Elgimiabi et al.) and in WO 2017/197087 (Aizawa).

In a particularly advantageous aspect of the disclosure, the thermally curable resin for use herein is an epoxy resin selected from the group consisting of novolac epoxy resins, bisphenol epoxy resins, in particular those derived from the reaction of bisphenol-A with epichlorhydrin (DGEBA resins), and any mixtures thereof.

Thermal curing initiators for the thermally curable resin for use herein are not particularly limited. Any thermal curing initiators for thermally curable resins commonly known in the art of structural adhesives may be used in the context of the present disclosure. Suitable thermal curing initiators for use herein may be easily identified by those skilled in the art in the light of the present disclosure.

According to one typical aspect of the disclosure, the thermal curing initiator for use herein is selected from the group consisting of rapid-reacting curing initiators, latent curing initiators, and any combinations or mixtures thereof. More typically, the thermal curing initiator for use herein is selected from the group consisting of rapid-reacting thermally-initiated curing initiators, latent thermally-initiated curing initiators, and any combinations or mixtures thereof.

According to an advantageous aspect of the present disclosure, the thermal curing initiator is selected from the group consisting of primary amines, secondary amines, and any combinations or mixtures thereof.

According to another advantageous aspect, the amines for use as thermal curing initiator for the thermally curable resin are selected from the group consisting of aliphatic amines, cycloaliphatic amines, aromatic amines, aromatic structures having one or more amino moiety, polyamines, polyamine adducts, dicyandiamides, and any combinations or mixtures thereof.

According to still another advantageous aspect of the disclosure, the thermal curing initiator for use herein is selected from the group consisting of dicyandiamide, polyamines, polyamine adducts, and any combinations or mixtures thereof.

In a preferred aspect, the curing initiator of the thermally curable resin for use in the present disclosure is selected to be dicyandiamide.

In an advantageous execution, the curable precursor of the present disclosure further comprises a thermal curing accelerator for the thermally curable resin. Any thermal curing accelerators for thermally curable resins commonly known in the art of structural adhesives may be formally used in the context of the present disclosure. Suitable thermal curing initiators for use herein may be easily identified by those skilled in the art in the light of the present disclosure.

Thermal curing initiators and thermal curing accelerators are well known to those skilled in the art of structural adhesive compositions. Suitable thermal curing initiators and thermal curing accelerators for use herein and their methods of manufacturing are amply described for example in EP-A1-2 700 683 (Elgimiabi et al.) and in WO 2017/197087 (Aizawa).

In one advantageous execution, the thermal curing accelerator for use herein is selected from the group consisting of polyamines, polyamine adducts, ureas, substituted urea adducts, imidazoles, imidazole salts, imidazolines, aromatic tertiary amines, and any combinations or mixtures thereof.

In one preferred execution, the thermal curing accelerator for the thermally curable resin is selected from the group of polyamine adducts, substituted ureas, in particular N-substituted urea adducts.

In a particularly preferred execution of the disclosure, the thermal curing accelerator for the thermally curable resin is selected from the group of substituted urea adducts, in particular N-substituted urea adducts. In the context of the present disclosure, it has been indeed surprisingly discovered that the use of a thermal curing accelerator for the thermally curable resin selected from the group of substituted urea adducts, in particular N-substituted urea adducts, substantially improves the adhesion properties, in particular the peel adhesion properties of the resulting structural adhesive composition. Without wishing to be bound by theory, it is believed that the use of a thermal curing accelerator selected from the group of substituted urea adducts, in particular N-substituted urea adducts, beneficially impacts the overall curing profile of the curable precursor according to the present disclosure, which in turn translates into improved adhesion performance.

According to an advantageous aspect of the present disclosure, the curable precursor may further comprise a second thermally curable resin which is typically different from the (first) thermally curable resin as describe above.

In an advantageous aspect, the thermally curable resin for use in the present disclosure comprises at least one functional group selected from the group consisting of epoxy groups, in particular glycidyl groups. Advantageously still, the second thermally curable resin for use herein is an epoxy resin, in particular selected from the group consisting of phenolic epoxy resins, bisphenol epoxy resins, hydrogenated epoxy resins, aliphatic epoxy resins, halogenated bisphenol epoxy resins, novolac epoxy resins, and any mixtures thereof.

In a particularly preferred execution of the disclosure, the second thermally curable resin for use herein is an epoxy resin selected from the group consisting of hydrogenated bisphenol epoxy resins, in particular those derived from the reaction of hydrogenated bisphenol-A with epichlorhydrin (hydrogenated DGEBA resins), and any mixtures thereof. In the context of the present disclosure, it has been indeed surprisingly discovered that the use of a second thermally curable resin selected in particular from the group of hydrogenated bisphenol epoxy resins, substantially maintains or even improve the adhesion properties, in particular the peel adhesion properties of the resulting structural adhesive composition towards oily contaminated substrates. These specific curable precursors are particularly suitable to result into structural adhesive compositions having outstanding excellent oil-contamination tolerance towards, in particular oily contaminated metal substrates.

Exemplary oily contamination is for example mineral oils, and synthetic oils. Typical mineral oils include paraffinic mineral oils, intermediate mineral oils and naphthenic mineral oils.

According to a typical aspect, the curable precursor according to the disclosure comprises from 2 to 50 wt.%, from 2 to 40 wt.%, from 3 to 40 wt.%, from 5 to 30 wt.%, from 10 to 30 wt.%, or even from 15 to 30 wt.%, of the thermally curable resin(s), wherein the weight percentages are based on the total weight of the curable precursor.

Preferably, the self-polymerizable multifunctional compound is selected from acrylate and/or methacrylate monomers, preferably from methacrylate monomers, more preferably from dimethacrylate monomers. The use of these monomers gives good tape-ability of the resins mixture and permits the realization of specific thick multilayer tapes. For instance, tapes having thicknesses of higher than 600 micrometers may be achieved. In this regard, it is preferred that the self-polymerizable multifunctional compound comprises a polyether oligomeric backbone.

Polyether oligomer backbones for use herein are not particularly limited, as long as they fulfill the above-detailed requirements. Suitable polyether oligomer backbones for use herein may be easily identified by those skilled in the art in the light of the present disclosure.

Without wishing to be bound by theory, it is believed that the radiation self-polymerizable multi-functional compounds as described above not only participate in forming the polymeric material comprising the self-polymerization reaction product of the self-polymerizable multi-functional compounds under the stage-B reaction described hereinbefore and which lead to a phase change of the initial curable precursor, but also formally act as a reactive diluent, rheological modifier and compatibilizer for the curable precursor, which in turn contributes to provide the curable precursor with outstanding flexibility characteristics and the stage-B reaction product with advantageous elasticity properties. The radiation self-polymerizable multi-functional compounds as described above are also believed to beneficially impact the adhesion properties of the curable precursor, due in particular to the beneficial surface wetting properties provided in particular by the oligomeric polyether backbone. Accordingly, it is preferred that the polymeric material comprising the self-polymerization reaction product of the polymerizable material comprising the radiation self-polymerizable multi-functional compound is an elastomeric material. This is highly advantageous for industrial large-scale applications because the multilayer structural adhesive tape may be applied by fast automated or robotic equipment.

In one advantageous aspect of the present disclosure, the radiation self-polymerizable multi-functional compound for use herein comprises a polyether oligomeric backbone having a number average molecular weight of at least 2000 g/mol.

Unless otherwise indicated, the number average molecular weight of the radiation self-polymerizable multi-functional compound is determined by conventional gel permeation chromatography (GPC) using appropriate techniques well known to those skilled in the art.

In a beneficial aspect of the disclosure, the polyether oligomeric backbone for use herein has a number average molecular weight greater than 2000 g/mol, greater than 2500 g/mol, greater than 3000 g/mol, greater than 3500 g/mol, or even greater than 4000 g/mol.

In another beneficial aspect of the disclosure, the polyether oligomeric backbone has a number average molecular weight greater no greater than 10.000 g/mol, no greater than 9500 g/mol, no greater than 9000 g/mol, no greater than 8500 g/mol, or even no greater than 8000 g/mol.

In still another beneficial aspect, the polyether oligomeric backbone for use in the present disclosure has a number average molecular weight in a range from 2000 to 20.000 g/mol, from 2000 to 15.000 g/mol, from 2000 to 12.000 g/mol, from 2500 to 10.000 g/mol, from 2500 to 9.000 g/mol, from 3000 to 8500 g/mol, from 3500 to 8000 g/mol or even from 4000 to 8000 g/mol.

In yet another beneficial aspect of the disclosure, the polyether oligomeric backbone comprises (or consists of) a linear polyether oligomeric backbone.

In an advantageous aspect, the at least one free-radical (co)polymerizable reactive group located at each terminal position of the polyether oligomeric backbone is selected from the group consisting of ethylenically unsaturated groups.

According to another advantageous aspect, the ethylenically unsaturated groups are selected from the group consisting of (meth)acrylic groups, vinyl groups, styryl groups, and any combinations or mixtures thereof.

In a more advantageous aspect of the disclosure, the ethylenically unsaturated groups for use herein are selected from the group consisting of methacrylic groups, acrylic groups, and any combinations or mixtures thereof.

In a particularly preferred aspect of the disclosure, the ethylenically unsaturated groups for use herein are selected from the group of methacrylic groups.

Advantageously, the radiation self-polymerizable multi-functional compound for use herein is an ethylenically unsaturated compound.

According to yet another advantageous aspect, the radiation self-polymerizable multi-functional compound for use in the present disclosure has a glass transition temperature (Tg) no greater than 20°C, no greater than 15°C, or even no greater than 10°C, when measured by Differential Scanning Calorimetry (DSC).

Without wishing to be bound by theory, it is believed that radiation self-polymerizable multi-functional compounds having a glass transition temperature (Tg) no greater than 20°C, no greater than 15°C, or even no greater than 10°C, are provided with advantageous viscoelastic characteristics which are in turn believed to beneficially contribute to providing the advantageous properties described hereinbefore with respect to the overall radiation self-polymerizable multi-functional compound.

In one advantageous aspect, the curable precursor of the present disclosure comprises no greater than 25 wt.%, no greater than 20 wt.%, no greater than 15 wt.%, no greater than 10 wt.%, or even no greater than 8 wt.%, of the radiation self-polymerizable multi-functional compound, wherein the weight percentages are based on the total weight of the curable precursor.

In another advantageous aspect, the curable precursor of the present disclosure comprises from 0.5 to 20 wt.%, from 0.5 to 15 wt.%, from 1 to 15 wt.%, from 2 to 15 wt.%, from 2 to 12 wt.%, from 2 to 10 wt.%, from 3 to 10 wt.%, or even from 3 to 8 wt.%, of the radiation self-polymerizable multi-functional compound, wherein the weight percentages are based on the total weight of the curable precursor.

The curable precursor according to the present disclosure further comprises a free-radical polymerization initiator for the radiation self-polymerizable multi-functional compound which is activated by visible light. Free-radical polymerization initiators for the radiation self-polymerizable multi-functional compound for use herein are not particularly limited, as long as they may be activated by visible light. Suitable compounds for use herein may be easily identified by those skilled in the art in the light of the present disclosure.

Preferably, the free-radical polymerization initiator is activated by light having wavelengths of at least 350 nm. Also, it is preferred that the free-radical polymerization initiator is activated by light having wavelengths of up to 750 nm. Accordingly, it is preferred that the free-radical polymerization initiator is activated by light having wavelengths in the range of from 350 nm to 750 nm, preferably from 380 to 700 nm, more preferably from 400 to 650 nm. That is, the free-radical polymerization initiator may be activated by light having wavelengths in the range of from 380 to 450 nm, and/or from 450 to 485 nm, and/or from 485 to 500 nm, and/or 500 to 565 nm, and/or from 565 to 590 nm, and/or from 590 to 625 nm, and/or from 625 to 700 nm. Particularly preferred herein is blue light, i.e. light having wavelengths from 450 to 485 nm. For instance, the free-radical polymerization initiator may be activated by light having wavelengths in the range of from (i) 450 to 485 nm, and optionally (ii) from 380 to 450 nm, from 485 to 500 nm, 500 to 565 nm, from 565 to 590 nm, from 590 to 625 nm, and/or from 625 to 700 nm. Thus, other wavelengths of the visible spectrum of light may be utilized.

According to a typical aspect of the disclosure, the free-radical polymerization initiator of the radiation self-polymerizable multi-functional compound is selected from the group consisting of Norrish type (I) free-radical polymerization initiators, Norrish type (II) free-radical polymerization initiators, and any combinations or mixtures thereof.

According to one advantageous aspect of the disclosure, the free-radical polymerization initiator of the radiation self-polymerizable multi-functional compound is selected from the group consisting of Norrish type (I) free-radical polymerization initiators, and any combinations or mixtures thereof.

According to a more advantageous aspect of the disclosure, the free-radical polymerization initiator of the radiation self-polymerizable multi-functional compound is selected from alpha-diketones and/or phosphinoxides, preferably from camphorquinone, acylphosphinoxide, phenyl-propane-dione, acrylphosphinoxide, dibenzoyl, 1-phenyl-1,2-propandione, and any mixtures and combinations thereof.

According to an even more advantageous aspect of the disclosure, the free-radical polymerization initiator for use herein is wherein the free-radical polymerization initiator of the radiation self-polymerizable multi-functional compound is camphorquinone.

In one typical aspect, the curable precursor of the disclosure comprises no greater than 10 wt.%, no greater than 8 wt.%, no greater than 6 wt.%, no greater than 5 wt.%, no greater than 4 wt.%, no greater than 2 wt.%, no greater than 1 wt.%, no greater than 0.8 wt.%, no greater than 0.6 wt.%, no greater than 0.5 wt.%, no greater than 0.4 wt.%, no greater than 0.2 wt.%, or even no greater than 0.1 wt.%, of the free-radical polymerization initiator of the radiation self-polymerizable multi-functional compound, wherein the weight percentages are based on the total weight of the curable precursor.

In another typical aspect, the curable precursor of the disclosure comprises from 0.01 to 10 wt.%, from 0.01 to 8 wt.%, from 0.02 to 6 wt.%, from 0.02 to 5 wt.%, from 0.02 to 4 wt.%, from 0.03 to 3 wt.%, from 0.03 to 2 wt.%, from 0.03 to 1.8 wt.%, from 0.03 to 1.6 wt.%, from 0.03 to 1.5 wt.%, from 0.03 to 1.4 wt.%, or even from 0.03 to 1 wt.%, of the free-radical polymerization initiator of the radiation self-polymerizable multi-functional compound, wherein the weight percentages are based on the total weight of the curable precursor.

In one particular aspect of the curable precursor according to the disclosure, the weight ratio of the radiation self-polymerizable multi-functional compound to the free-radical polymerization initiator of the radiation self-polymerizable multi-functional compound is a range from 200:1 to 5:1, 180:1 to 8:1, 150:1 to 8:1, 100:1 to 8:1, or even from 100:1 to 10:1.

It was also found that it is advantageous to employ at least one reactive diluent in the curable precursor of the present disclosure. This is believed due to the free-radical polymerization initiators as described herein may be better dissolved in the reactive diluent. Accordingly, it is preferred that the free-radical polymerization initiators as described are dissolved in the at least one reactive diluent before mixing with the other constituents of the curable precursor according to the present disclosure. Reactive diluents are known to the skilled person generally from the technical field of structural adhesives, in particular epoxy-resin based structural adhesives. Preferably, the at least one reactive diluent is selected from glycidyl ethers of linear or branched alkanol, preferably from diglycidyl ethers of linear or branched alkyldiols.

Another advantageous aspect of the present disclosure takes advantage of the fact that presently commercially available blue-light emitting diode lamps (LED) are all having a significant amount of radiation output also in the UV spectrum. However, by using optical brighteners, this particularly UV spectrum may be used for the present disclosure. Common optical brighteners are fluorescent compounds, i.e. they absorb light in the UV-spectrum, and emit light in the visible spectrum, in particular in the blue region. Thus, the UV light emitted by commonly used LED may be transformed into blue light which then activates the free-radical polymerization initiators as described herein. This may have the effect that less free-radical polymerization initiators as described herein may be needed, or that irradiation times may be reduced. Accordingly, it is preferred that the curable precursor as described herein further comprises at least one optical brightener. Preferably, the optical brightener is a fluorescent compound. The optical brightener preferably absorbs light in the ultra-violet range of light, preferably absorbs light having wavelengths in the range of from 290 to 490 nm. The optical brightener is preferably a fluorescent compound re-emitting light in the visible range, preferably of wavelengths in the range of from 400 to 480 nm, optionally (ii) from 380 to 450 nm, from 485 to 500 nm, 500 to 565 nm, from 565 to 590 nm, from 590 to 625 nm, and/or from 625 to 700 nm. The at least one optical brightener may be contained in the curable precursor in an amount in the range of from 0.001 to 0.08 wt.-%, preferably from 0.005 to 0.05 wt.-%, more preferably from 0.008 to 0.03 wt.-%, based on the total weight of the curable precursor. Commercially optical brighteners of these types are known to the skilled person, examples of which are set forth in the experimental section of the present disclosure.

According to one advantageous aspect, the curable precursor of the present disclosure comprises:
a) from 5 to 40 wt.%, from 5 to 35 wt.%, from 10 to 35 wt.%, from 15 to 35 wt.%, from 15 to 30 wt.%, or even from 15 to 25 wt.%, of the thermally curable resin(s);
b) from 0.1 to 20 wt.%, from 0.2 to 15 wt.%, from 0.2 to 10 wt.%, from 0.5 to 8 wt.%, from 1 to 6 wt.%, or even from 2 to 5 wt.%, of the thermal curing initiator for the thermally curable resin;
c) from 0.5 to 20 wt.%, from 0.5 to 15 wt.%, from 1 to 15 wt.%, from 2 to 15 wt.%, from 2 to 12 wt.%, from 2 to 10 wt.%, from 3 to 10 wt.%, or even from 3 to 8 wt.%, of the radiation self-polymerizable multi-functional compound;
d) from 0.01 to 10 wt.%, from 0.02 to 6 wt.%, from 0.02 to 5 wt.%, from 0.02 to 4 wt.%, from 0.03 to 2 wt.%, from 0.03 to 1.8 wt.%, from 0.03 to 1.5 wt.%, or even from 0.03 to 1 wt.%, of the free-radical polymerization initiator for the radiation self-polymerizable multi-functional compound;
e) optionally, 0.05 to 10 wt.%, from 0.1 to 8wt.%, from 0.1 to 5 wt.%, from 0.2 to 4 wt.%, from 0.5 to 3 wt.%, or even from 1 to 3 wt.%, of a thermal curing accelerator for the thermally curable resin;
f) optionally, a toughening agent;
g) optionally, a thixotropic agent;
h) optionally, at least one reactive diluent; and
i) optionally, at least one optical brightener;
wherein the weight percentages are based on the total weight of the curable precursor.

In an advantageous execution, the curable precursor of the present disclosure may further comprise a thixotropic agent. Any thixotropic agents commonly known in the art of structural adhesives may be formally used in the context of the present disclosure. Suitable thixotropic agents for use herein may be easily identified by those skilled in the art in the light of the present disclosure.

According to one advantageous aspect of the disclosure, the curable precursor further comprises a thixotropic agent which is typically selected from the group of inorganic and organic thixotropic agents.

According to another advantageous aspect of the disclosure, the thixotropic agent for use herein is selected from the group of particulate thixotropic agents.

According to a more advantageous aspect of the disclosure, the thixotropic agent for use herein is selected from the group of inorganic thixotropic agents, in particular silicon-based thixotropic agents and aluminum-based thixotropic agents.

According to an even more advantageous aspect of the disclosure, the thixotropic agent for use herein is selected from the group consisting of silica-based and silicate-based thixotropic agents.

In one very advantageous aspect, the curable precursor of the present disclosure further comprises a thixotropic agent selected from the group consisting of fumed silica particles, in particular hydrophilic fumed silica and hydrophobic fumed silica; silicates particles, in particular phyllosilicates, and any mixtures thereof.

In one particularly advantageous aspect of the disclosure, the thixotropic agent for use herein is selected from the group of organic thixotropic agents, in particular polyamide waxes, hydrolysed castor waxes and urea derivatives-based thixotropic agents.

In another particularly advantageous aspect of the disclosure, the thixotropic agent for use herein is selected from the group consisting of fumed silica particles, in particular hydrophobic fumed silica particles; silicate-based particles, in particular phyllosilicate particles; polyamide waxes, and any mixtures thereof.

According to an exemplary aspect of the present disclosure, the curable precursor comprises no greater than 20 wt.%, no greater than 15 wt.%, no greater than 10 wt.%, no greater than 8 wt.%, or even no greater than 5 wt.%, of the thixotropic agent, based on the overall weight of the curable precursor.

According to another exemplary aspect of the present disclosure, the curable precursor comprises from 0.05 to 20 wt.%, from 0.1 to 15 wt.%, from 0.5 to 10 wt.%, from 0.5 to 8 wt.%, from 1 to 6 wt.%, or even from 1 to 5 wt.%, of the thixotropic agent, based on the overall weight of the curable precursor.

The curable precursor of the disclosure may take any suitable form, as well known to those skilled in the art of structural adhesives. Suitable forms will depend on the targeted application and usage conditions.

While the surfaces of the multilayer structural adhesive tape according to the present disclosure may be less sensitive than comparable tapes according to the prior art, it is still desirable to protect the major surfaces from exposure towards dirt, dust, moisture or even physical damage typically encountered during shipping or application environments. Therefore, it is preferred that the multilayer structural adhesive tape as described herein further comprises a liner on at least one of its major surfaces. This has the advantage that the outer major surface of the tape according to the present disclosure is protected against physical or chemical influences as well against moisture. Furthermore, the inclusion of at least one liner may also improve handling of the tape as described herein. That is, it is preferred that one major surface of the multilayer structural adhesive tape is covered by a liner, and it is further preferred that both major surfaces of the structural adhesive tape are covered by liners. In the latter case the two liners may be the same or be different, i.e. in dimension, structure and chemical constitution. Liners as such are not limited for the use herein, and are well-established in the state of the art. Including at least one liner may also be advantageous when storing or shipping the multilayer structural adhesive tape as described herein in form of a roll.

Furthermore, application of the tape as described herein from a roll may be advantageous when carried out in large scale and/or by fast automatic or robotic equipment. Thus, it is preferred that the multilayer structural adhesive tape is in form of a roll. Particularly advantageous for these purposes are planetary rolls and level-wound rolls. Accordingly, it is preferred that the multilayer structural adhesive roll is wound in a level-wound roll or in a planetary roll.

According to a typical aspect of the partially cured precursor according to the disclosure, the polymeric material comprising the self-polymerization reaction product of the polymerizable material comprising the radiation self-polymerizable multi-functional compound is substantially fully polymerized and has in particular a degree of polymerization of more than 90%, more than 95%, more than 98%, or even more than 99%.

As the polymeric material comprising the self-polymerization reaction product of the radiation self-polymerizable multi-functional compound is substantially fully polymerized, this polymerization reaction has advantageously a fixed and irreversible end and will not trigger any shelf-life reducing reactions in the remaining of the curable precursor. This characteristic is believed to beneficially impact the overall shelf-life of the curable precursor.

In one typical aspect of the disclosure, the partially cured precursor has a shear storage modulus in a range from 1000 to 250.000 Pa, from 1000 to 200.000 Pa, from 2000 to 150.000 Pa, from 3000 to 150.000 Pa, from 3000 to 100.000 Pa, or even from 3000 to 80.000 Pa, when measured according to the test method described in the experimental section.

In one advantageous aspect, the partially cured precursor according to the disclosure has a glass transition temperature (Tg) no greater than 0°C, no greater than - 5°C, no greater than -10°C, no greater than -15°C, or even no greater than -20°C, when measured by DSC.

In another advantageous aspect of the disclosure, the partially cured precursor has an elongation at break of at least 50%, at least 80%, at least 100%, at least 150%, or even at least 200%, when measured according to tensile test DIN EN ISO 527. This particular property makes the partially cured precursor and the resulting structural adhesive suitable for automated handling and application, in particular by high-speed robotic equipment. More particularly, the partially cured precursor and the resulting structural adhesive of the present disclosure enables efficient automation of the process of forming a metal joint between metal plates.

According to another aspect, the present disclosure relates to a structural adhesive composition obtainable by substantially fully curing the curable precursor as described above, in particular at a temperature T2 or greater.

In the context of the present disclosure, the expression "substantially fully curing the curable precursor" is meant to express that more than 90 wt.%, more than 95wt.%, more than 98 wt.%, or even more than 99 wt.% of the overall amount of the thermally curable resins and the radiation self-polymerizable multi-functional compounds are polymerized/cured as the result of the polymerization/curing step(s).

Suitable surfaces and articles for use herein are not particularly limited. Any surfaces, articles, substrates and material commonly known to be suitable for use in combination with structural adhesive compositions may be used in the context of the present disclosure.

In a typical aspect, the article for use herein comprises at least one part, in particular a metal or a composite material part.

In an advantageous aspect, the composite article according to the disclosure is used for body-in-white bonding applications for the automotive industry, in particular for hem flange bonding of parts, more in particular metal or composite material parts; and for structural bonding operations for the aeronautic and aerospace industries.

Furthermore, the present disclosure is directed to a process for making a multilayer structural adhesive tape, comprising the following steps:
(I) Coating a first composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto a substrate such as to form a first adhesive precursor layer;
(II) Irradiating the first adhesive precursor layer with visible light such as to initiate self-polymerization of the radiation self-polymerizable compound, whereby a first adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound;
(III) Coating a second composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto a substrate such as to form a second adhesive precursor layer;
(IV) Irradiating the second adhesive precursor layer with visible light such as to initiate self-polymerization of the radiation self-polymerizable compound, whereby a second adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound;
(V) Laminating the first adhesive layer onto the second adhesive layer such that a multilayer adhesive tape is obtained.

It is understood that everything described for the structural adhesive precursor and the multilayer structural adhesive tape as described herein, in particular with compounds, compositions, including ranges of parameters, also apply to the methods according to the present disclosure. For instance, it is preferred that a further first adhesive layer (A) is laminated onto the second adhesive layer (B) such that the sequence of adhesive layers is first adhesive layer (A) - second adhesive layer (B) - further first adhesive layer (A).

In still another aspect of the present disclosure, it is provided a method for making a multilayer structural adhesive tape, comprising the following steps
(la) Coating a first composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto a substrate such as to form a first adhesive precursor layer;
(Ila) Coating a second composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto first adhesive precursor layer such as to form a second adhesive precursor layer and a multilayer structural adhesive tape precursor;
(IIIa) Irradiating the multilayer structural adhesive tape precursor with visible light such as to initiate self-polymerization of the radiation self-polymerizable compound in the first adhesive precursor layer and the second adhesive precursor layer;
whereby a first adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained;
wherein the thermally curable resin is embedded into the polymeric material comprising the self-polymerization reaction product of a polymerizable material comprising a radiation self-polymerizable multi-functional compound;
whereby a second adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained;
wherein the thermally curable resin is embedded into the polymeric material comprising the self-polymerization reaction product of a polymerizable material comprising a radiation self-polymerizable multi-functional compound;
thereby obtaining a multilayer structural adhesive tape.

As already discussed, it is preferred that the free-radical polymerization initiator is activated by light having wavelengths in the range of from 350 nm to 750 nm, preferably from 380 to 700 nm, more preferably from 400 to 650 nm. It is further preferred that the free-radical polymerization initiator is activated by light having wavelengths in the range of from (i) 450 to 485 nm, and optionally (ii) from 380 to 450 nm, from 485 to 500 nm, 500 to 565 nm, from 565 to 590 nm, from 590 to 625 nm, and/or from 625 to 700 nm.

Furthermore, it is advantageous to have three structural adhesive layers in the multistructrual adhesive tape. Therefore, it is preferred that a further first adhesive composition is coated onto the surface opposite of the surface already coated with the first adhesive composition of the second adhesive precursor layer prior to step (IIIa). Accordingly, a sequence of structural adhesive layers (A) - (B) - A is obtained. Preferably, the first adhesive composition is different from the second adhesive composition in chemical constitution of the curable resins, amounts of curable resins, chemical constitution of thermal curing initiator for the thermally curable resin, amount of thermal curing initiator for the thermally curable resin, chemical constitution of further compounds present, amounts of further compounds present, and any combination thereof. In this regard, it is preferred that the second adhesive precursor layer is coated to a larger thickness than the first adhesive precursor layer. Preferably, the thickness of the second adhesive precursor layer is at least 30 % larger, preferably at least 60 % larger, more preferably at least 100 % larger, and even more preferably at least 150 % larger than the thickness of the first adhesive precursor layer. Coating of the first and/or second adhesive precursor composition may be carried out by means of extrusion/die, calander, doctor blade, or hot-melt extrusion process. Preferably, coating of the first adhesive composition and/or second adhesive composition is preferably carried out by means of a hot-melt co-extrusion process. This allows for an efficient and reliable preparation of a multilayer adhesive tape having layers of reliable and reproducible thicknesses. Also, this allows for flexible adjustment of layer thicknesses. Preferably, the extrusion process comprises use of multi-screw extruders, twin screw extruders, and/or planetary roll extruders. It is further preferred that co-extruding the first adhesive composition and the second adhesive composition is carried out by means of a multilayer co-extrusion die. Moreover, the methods as described herein are continuous methods for producing multilayer structural adhesive tapes. This is advantageous for producing the multilayer structural adhesive tapes as described herein in large quantities and on an industrial scale.

According to a particularly beneficial aspect of the process, the mixing apparatus for use herein is selected from the group consisting of single- and multi-screw extruders, and any combinations thereof.

In the context of the present disclosure, it has been surprisingly discovered that the use of single- and multi-screw extruders is particularly beneficial in the process of manufacturing a (shaped) curable precursor of a (hybrid) structural adhesive composition as described above. Single- and multi-screw extruders have been found to provide excellent mixing performance and characteristics for the initial ingredients and raw materials of the curable precursor as described above, which in turn provide excellent extrudability characteristics of the extrudable composition, in particular when used in combination with an extrusion die.

According to another beneficial aspect of the process, the mixing apparatus for use herein is selected from the group consisting of single screw extruders, twin screw extruders, planetary roller extruders, and ring extruders.

According to a more beneficial aspect of the process, the mixing apparatus for use herein is selected from the group consisting of co-rotating multi-screw extruders and counter-rotating multi-screw extruders.

According to an even more beneficial aspect of the process, the mixing apparatus for use herein is a twin-screw extruder, in particular a co-rotating twin-screw extruder.

According to an alternatively beneficial aspect of the process, the mixing apparatus for use herein is a planetary roller extruder comprising in particular a center spindle and multiple planetary gear spindles with center spindle and planetary gear spindles featuring a screw like geometry.

In yet another aspect of the present disclosure, there is a provided a method of bonding two parts comprising the use of a multilayer structural adhesive tape as described herein.

The present disclosure further provides a method of bonding two parts, which comprises the steps of:
a) applying a multilayer structural adhesive tape as described herein to a surface of at least one of the two parts;
b) joining the two parts so that the multilayer structural adhesive tape is positioned between the two parts; and
c) substantially fully curing the multilayer structural adhesive tape by initiating the thermal curing initiator for the thermally curable resin, thereby obtaining a substantially fully cured structural adhesive composition and adhesively bonding the two parts.

According to an advantageous aspect of the method of bonding two parts, the two parts are metal parts.

Methods of bonding two parts, in particular for hem flange bonding of metal parts, are well known to those skilled in the art of structural adhesive compositions. Suitable methods of bonding two parts for use herein are amply described e.g. in EP-A1-2 700 683 (Elgimiabi et al.) and in WO 2017/197087 (Aizawa).

In a particular aspect of the present disclosure, the substrates, parts and surfaces for use in these methods comprise a metal selected from the group consisting of aluminum, steel, iron, and any mixtures, combinations or alloys thereof. More advantageously, the substrates, parts and surfaces for use herein comprise a metal selected from the group consisting of aluminum, steel, stainless steel and any mixtures, combinations or alloys thereof. In a particularly advantageous execution of the present disclosure, the substrates, parts and surfaces for use herein comprise aluminum.

Preferably, initiating the thermal curing initiator in step (a) is carried out by heating to a temperature of greater than 80 °C, preferably greater than 100 °C, and more preferably greater than 120 °C. Furthermore, it is preferred that step a) and/or step b) are carried out at ambient conditions. This is advantageous because applying and joining of the parts may be carried out at ambient conditions as present in large-scale industrial manufacturing operations. No additional heating or cooling is required, which results in an inexpensive, secure and easy process. Fully curing of the multilayer structural adhesive tape is then initiated at higher temperatures. This may also add to a cost-efficient process since in some applications, a coating or lacquer is applied which requires heating to cure. Thus, in one heating step, curing of the coating of lacquer as well as of the multilayer structural adhesive tape may be achieved.

Furthermore, due to the special combination of properties of the multilayer structural adhesive tape as described herein, the present disclosure further provides a use of the multilayer structural adhesive tape as described herein for bonding and joining operations in the automotive, home applicance, consumer electronics, aerospace, marine or commercial transportation industry. Preferably, the use comprises bonding and joining metal parts, composite parts, carbon parts, ceramic parts and/or glass parts.

### EXAMPLES

The present disclosure is further illustrated by the following examples. These examples are merely for illustrative purposes only and are not meant to be limiting on the scope of the appended claims.

### Test Methods:

### Preparation of the test samples for OLS and T-Peel Tests:

The surface of OLS and T-peel samples (steel, grade DX54+ZMB-RL1615) are cleaned with n-heptane and in case of oily contaminated samples, coated with 3 g/m² of the testing oil (PL 3802-39S commercially available from Fuchs Petrolub AG, Germany). The test samples are left at ambient room temperature (23°C +/- 2°C, 50% relative humidity +/-5%) for 24 hours prior to testing and the OLS and T-peel strengths are measured as described below.

### 1) Overlap Shear Strength (OLS) according to DIN EN 1465.

Overlap shear strength is determined according to DIN EN 1465 using a Zwick Z050 tensile tester (commercially available by Zwick GmbH & Co. KG, Ulm, Germany) operating at a cross head speed of 10 mm/min. For the preparation of an Overlap Shear Strength test assembly, the shaped B-stage tape is placed onto one surface of a prepared test panel. Afterwards, the sample is covered by a second steel strip forming an overlap joint of 13 mm. The overlap joints are then clamped together using two binder clips and the test assemblies are further stored at room temperature for 4 hours after bonding, and then placed into an air circulating oven for 30 minutes at 180 °C. The next day, the samples are tested directly. Five samples are measured for each of the examples and results averaged and reported in MPa.

### 2) T-Peel strength according to DIN EN ISO 11339.

T-Peel strength is determined according to DIN EN ISO 11339 using a Zwick Z050 tensile tester (commercially available by Zwick GmbH & Co. KG, Ulm, Germany) operating at a cross head speed of 100 mm/min. For the preparation of a T-Peel Strength test assembly, the shaped B-stage tape is directly placed onto the middle of the T-peel test panel. The second test panel surface is then immediately bonded to the first forming an overlap joint of 100 mm. The samples are then fixed together with clamps and first stored at room temperature for 12 hours, and then placed into an air circulating oven for 30 minutes at 180 °C. The next day, the samples are tested directly. Three samples are measured for each of the examples and results averaged and reported in Newtons (N).

### 3)Overlap shear strength performance on oil contaminated substrates

OLS strength performance according to DIN EN 1465 is also tested on steel samples contaminated with testing oil (3 g/m² of PL 3802-39S commercially available from Fuchs Petrolub AG, Germany), generally following the testing procedure under 1).

### 4)T-Peel performance

Similarly, T-Peel performance is also tested on steel samples contaminated with testing oil (3 g/m² of PL 3802-39S commercially available from Fuchs Petrolub AG, Germany) following DIN EN ISO 11339 as described under 2).

### Examples:

### General synthesis of multilayer tapes.

First, dispersion of core shell in epoxy resin with high shear is carried out by stirring at 3500 rpm for 5 minutes at 90 °C. Next, addition and mixing of melt solid resin at 90 °C is performed. After that, liquid resin resins are added, and mixing is maintained until a homogeneous mixture is achieved. Aerosil R202 is added and mixing is maintained at 1500 rpm for 2 minutes at a temperature of mixture between 50 to 40 °C. Irgacure 1173 is added, and mixing is continued for 30 s. This is followed by addition of dicyandiamide, the accelerator (optional) and Diol-6000-DMA.

Tapes of 100 micrometers or 300 micrometers are coated using a knife coater on siliconized transparent colorless PET liner. The tapes are guided into a UV station and irradiated with UV A light to initiate b-stage crosslinking mechanism for 5 minutes. Multilayer tapes are obtained by laminating together different combinations of tape layers. The lamination is carried out by means of a hand roller to get bubbles free tapes.

### Example 1:

Tape A-B-A with soft flexible core B.

The soft tape B is not able to stick to metal (strength 0.3 MPa, adhesive failure mode). The tape construction A-B-A, however, allows to bond metal panels (5 MPa cohesive failure) while keeping the core of the tape soft.

**Table 1: Ingredients of Skin A and Core B of Ex. 1.**

| | Skin A | Core B |
|---|---|---|
| Epikote 828 | 47.7 | 0.0 |
| Epon1004F | 15.9 | 0.0 |
| Eponex 1510 | 8.0 | 0.0 |
| Paraloid EXL 2650J | 15.9 | 0.0 |
| YD-172 | 0.0 | 86.8 |
| Aerosil 200 | 3.2 | 3.0 |
| Dicyandiamide (DICY) | 3.8 | 1.6 |
| UR2T | 0.0 | 0.1 |
| Diol-6000-DMA | 5.0 | 7.4 |
| Irgacure 1173 | 0.5 | 1.0 |
| Total | 100 | 100 |

**Table 2: Test results. AF means adhesive failure mode, and CF refers to cohesive failure mode.**

| Results | Core B | A-B-A skin |
|---|---|---|
| Thickness | 1.05 | 1.2 |
| OLS strengths (MPa) | 0.3 | 5.1 |
| Failure mode of OLS | 85% AF | CF |

### Example 2: Advantage of different kinetics of multilayer thick tape.

Tapes with different epoxy curing kinetics are produced. The layer containing an accelerator of dicyandiamide starts the reaction at lower temperature. Reaction data is collected by DSC.

**Table 3: Ingredients of layers A, B1 and B2 of Ex. 2.**

| | A | B1 | B2 |
|---|---|---|---|
| Epoxy resin mixture | 85.89 | 85.60 | 85.86 |
| Fumed silica | 2.75 | 2.74 | 2.75 |
| Diol-6000-DMA | 4.91 | 4.79 | 4.85 |
| Irgacure 1173 | 1.00 | 1.00 | 1.00 |
| Dicyandiamide (DICY) | 5.44 | 5.38 | 5.44 |
| Accelerator 1 (Ancamine 2441) | 0 | 0.49 | 0 |
| Accelerator 2 (Amicure UR2T) | 0 | 0 | 0.1 |
| Total | | | |

| mixture | A | B1 | B2 |
|---|---|---|---|
| Onset of reaction in °C | 188 | 171 | 149 |
| Peak of reaction in °C | 197 | 185 | 163 |

**Table 4: Test results. AF means adhesive failure mode, and CF refers to cohesive failure mode.**

| Results | A-A-A tape | A-B1-A tapes | B1-A-B1 tapes | A-B1-A tapes | B1-A-B1 tapes | A-B2-A tapes | B2-A-B2 tapes |
|---|---|---|---|---|---|---|---|
| Thickness of tape | 0.9 mm 3-layers | 0.3 mm 3-layers | 0.3 mm 3-layers | 0.9 mm 3-layers | 0.9 mm 3-layers | 0.9 mm 3-layers | 0.9 mm 3-layers |
| OLS strengths (MPa) | 18.1 | 17.3 | 17.2 | 16.7 | 15.3 | 17.8 | 16.5 |
| Failure mode of OLS | CF | CF | CF | CF | CF | CF | AF |
| T-peel strengths (N) | 112 | 157 | 153 | 174 | 105 | 126 | 64 |
| Failure mode of T-peel | CF | CF | CF | CF | CF | CF | AF |

| Comparison A-B1-A vs. B1-A-B1 | thickness [mm] | thickness [mm] |
|---|---|---|
| | 0.3 | 0.9 |
| OLS improvement | 0.6 % | 9.1 % |
| T-Peel improvement | 2.6 % | 65.7 % |

In comparison to a monolayer (A-A-A tape) the peel strengths can be significantly improved. (112 to 174 N).

## Claims

1. A multilayer structural adhesive tape, comprising
(i) at least one first adhesive layer (A), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
(ii) at least one second adhesive layer (B), comprising (a) a thermally curable adhesive composition, (b) a thermal curing initiator for the thermally curable resin, (c) a polymeric material comprising the self-polymerization reaction product of a polymerizable material comprising a radiation self-polymerizable multi-functional compound, (d) optionally, some residual free-radical polymerization initiator for the radiation self-polymerizable multi-functional compound;
wherein
the thermally curable resins in the at least one first adhesive layer (A) and in the at least one second adhesive layer (B) are uncured and are in particular embedded into the polymeric material comprising the self-polymerization reaction product of a polymerizable material comprising a radiation self-polymerizable multi-functional compound;
wherein the self-polymerization of the polymerizable material comprising a radiation self-polymerizable multi-functional compound was effectuated by irradiation of a free-radical polymerization initiator for the radiation self-polymerizable multi-functional compound with light;
wherein the at least first adhesive layer (A) is different from the at least one second adhesive layer (B).

2. The multilayer structural adhesive tape according to claim 1, wherein the self-polymerizable multifunctional compound is selected from acrylate and/or methacrylate monomers, preferably from methacrylate monomers, more preferably from dimethacrylate monomers.

3. The multilayer structural adhesive tape according to claim 1 or claim 2, wherein the polymeric material comprising the self-polymerization reaction product of a polymerizable material comprising a radiation self-polymerizable multi-functional compound is an elastomeric material.

4. The multilayer structural adhesive tape according to any one of the preceding claims, wherein the thermally curable resin comprises at least one functional group selected from the group consisting of epoxy groups, in particular glycidyl groups.

5. The multilayer structural adhesive tape according to any one of the preceding claims, wherein the at least one first adhesive layer (A) is different from the at least one second adhesive layer (B) in at least one property selected from thickness and/or chemical composition leading to physical differences between the layers such as differences in thermal conductivity, electrical conductivity, expandability, viscoelasticity, toughness, adhesive strength, compressibility, and any combinations thereof.

6. The multilayer structural adhesive tape according to any one of the preceding claims, wherein the at least one first adhesive layer (A) is chemically different from the at least one second adhesive layer (B) in chemical composition of the adhesive resins, amounts of adhesive resins, chemical constitution of thermal curing initiator for the thermally curable resin, amount of thermal curing initiator for the thermally curable resin, chemical constitution of further compounds present, amounts of further compounds present, and any combination thereof.

7. The multilayer structural adhesive tape according to any one of the preceding claims, wherein the at least one first adhesive layer (A) exhibits a different curing behaviour than the at least one second adhesive layer (B).

8. The multilayer structural adhesive tape according to any one of the preceding claims, wherein the multilayer structural adhesive tape comprises two layers (A) and one layer (B) wherein layer (B) is located between a first layer (A) and a second layer (A) such that the order of adhesive layers is layer (A) - layer (B) - layer (A).

9. The multilayer structural adhesive tape according to any one of the preceding claims, wherein the thickness of layer (B) is larger than the thickness of layer (A).

10. The multilayer structural adhesive tape according to any one of the preceding claims, wherein the multilayer structural adhesive tape further comprises a layer (C) which is different from layer (A) and different from layer (B).

11. A method for making a multilayer structural adhesive tape, comprising the following steps
(la) Coating a first composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto a substrate such as to form a first adhesive precursor layer;
(Ila) Coating a second composition comprising (a) a radiation self-polymerizable multi-functional compound; (b) a free-radical polymerization initiator for the radiation self-polymerizable multi-functional compound; (c) a thermally curable adhesive composition; (d) a thermal curing initiator for the thermally curable resin; onto first adhesive precursor layer such as to form a second adhesive precursor layer and a multilayer structural adhesive tape precursor;
(IIIa) Irradiating the multilayer structural adhesive tape precursor with visible light such as to initiate self-polymerization of the radiation self-polymerizable compound in the first adhesive precursor layer and the second adhesive precursor layer; whereby a first adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound; whereby a second adhesive layer comprising (a) a polymeric material comprising the self-polymerization reaction product of a polymerizable material comprising a radiation self-polymerizable multi-functional compound, (b) a thermally curable resin; and (c) a thermal curing initiator for the thermally curable resin is obtained; wherein the thermally curable resin is embedded into the polymeric material comprising the self-polymerization reaction product of a polymerizable material comprising a radiation self-polymerizable multi-functional compound; thereby obtaining a multilayer structural adhesive tape.

12. The method according to claim 11, wherein the free-radical polymerization initiator is activated by light having wavelengths in the range of from 350 nm to 750 nm, preferably from 380 to 700 nm, more preferably from 400 to 650 nm.

13. The method according to claim 11 or claim 12, wherein the second adhesive precursor layer is coated to a larger thickness than the first adhesive precursor layer.

14. A method of bonding two parts, which comprises the steps of:
a) applying a multilayer structural adhesive tape according to any of claims 1 to 10 to a surface of at least one of the two parts;
b) joining the two parts so that the multilayer structural adhesive tape is positioned between the two parts; and
c) substantially fully curing the multilayer structural adhesive tape by initiating the thermal curing initiator for the thermally curable resin, thereby obtaining a substantially fully cured structural adhesive composition and adhesively bonding the two parts.

15. A use of the multilayer structural adhesive tape according to any one of claims 1 to 10 for bonding and joining operations in the automotive industry, home appliances industry, consumer electronics industry, aerospace industry, ship industry or commercial transportation industry.
